# EUROPÄISCHE PATENTSCHRIFT

(11) **EP 2 878 209 B1**
(45) Veröffentlichungstag und Bekanntmachung des Hinweises auf die Patenterteilung: **28.12.2022**
(21) Anmeldenummer: 13195215.2
(22) Anmeldetag: 30.11.2013
(51) Int. Cl.: A21D 13/00, A23P 20/12

(54) **Verfahren zur Herstellung von verzehrfertigen Zubereitungen**
Process for the preparation of consumable compositions
Procédé de préparation de compositions consommables

(43) Veröffentlichungstag der Anmeldung: 03.06.2015
(73) Patentinhaber: Symrise AG, 37603 Holzminden (DE)
(72) Erfinder: Barnekow, Sylvia, 37696 Marienmünster (DE); Batalia, Martina, 37691 Boffzen (DE); Lindner, Ingo, 37603 Holzminden (DE)
(74) Vertreter: Fabry, Bernd

(56) Entgegenhaltungen:
- US-A- 3 663 369
- US-A1- 2005 095 328
- US-A1- 2008 096 964
- US-A1- 2009 155 423
- YETING LIU ET AL: "Glass Transition and Enthalpy Relaxation of Amorphous Food Saccharides: A Review", JOURNAL OF AGRICULTURAL AND FOOD CHEMISTRY, Bd. 54, Nr. 16, 13. Juli 2006 (2006-07-13) , Seiten 5701-5717, XP055115681, ISSN: 0021-8561, DOI: 10.1021/jf060188r

## Beschreibung

### GEBIET DER ERFINDUNG

Die Erfindung befindet sich auf dem Gebiet Nahrungsmittel und betrifft neue feste Zubereitungen für den Verzehr, die in verbesserter Weise mit essbaren Partikeln ausgerüstet sind, ein entsprechendes Herstellverfahren sowie die Verwendung einer Zubereitung zum Aufbringen auf festen Oberflächen.

### TECHNOLOGISCHER HINTERGRUND

Bei zum Verzehr geeigneten Waren - oder allgemein Lebensmitteln - ist es häufig erwünscht, diese mit essbaren Stoffen auszurüsten. Dabei kann es sich im Allgemeinen entweder um Überzüge oder konkrete Partikel handeln, die an der Oberfläche fixiert werden. Diese Art der Ausrüstung kann der Dekoration oder der Verbesserung der äußeren Erscheinung dienen, aber auch die sensorischen Eigenschaften des Lebensmittels, wie beispielsweise den Geschmack, verändern.

### STAND DER TECHNIK

Essbare Filme und Überzüge enthaltend oder bestehend aus Proteinen gehören seit langer Zeit zum Stand der Technik, wie beispielsweise beschrieben in J.A. Torres in "Edible Films and Coatings from Protein", (in "Protein functionality in food systems", herausgegeben von N.S. Hettiarachchy, G.R. Ziegeler), Marcel Dekker, New York, 1994, S. 467 - 507 oder Indian Food Industry 2000, Vol. 19, No. 9 (January-February) S. 36-47**.**

Aus EP 0527153 B1 (Berwind) sind beispielsweise essbare Filmbildner zum Überziehen von Pharmazeutika oder Lebensmitteln bekannt, die eine filmbildende Menge an Cellulosepolymeren und Maltodextrin sowie einen Weichmacher enthalten.

US 2008/0096964 A1 betrifft ein Verfahren zur Herstellung eines Nahrungsmittelprodukts (unter anderen auch Knabberartikel), dadurch gekennzeichnet, dass eine flüssige Beschichtung auf mindestens einen Teil einer Nahrungsmittelbasis aufgebracht und erstarrt wird. Die flüssige Beschichtung umfasst die Kombination von eingekapselten mehrfach ungesättigten Fettsäuren (PUFA), einem Süßungsmittel und Wasser. Unter den möglichen Süßungsmitteln werden Kohlenhydrate wie hydrolisierte Stärke oder Glucose genannt. Die Beschichtung weist eine Dicke von etwa 10 bis etwa 50 µm auf.

US 2005/0095328 A1 betrifft ein Verfahren zur Fixierung essbarer Partikel zu einem Substrat, wobei das Substrat ein Knabberartikel und die essbareren Partikel Gewürze sind. Als Fixierungssystem werden getrockneter Glukosesirup und andere Kohlenhydrate, wie z.B. Dextrose, Dextrin, Maltodextrose, Saccharose, Polydextrose und deren Kombinationen genannt. Die verwendeten Kohlenhydratmischungen weisen einen Glasübergangspunkt zwischen 40 und 60 °C auf.

### AUFGABE DER ERFINDUNG

Die Fixierung von Partikeln an Lebensmitteln erfolgt typischerweise durch zuckerhaltige Fixierungssysteme, wie beispielweise Glasuren, oder durch fetthaltige Fixierungssysteme, wie beispielweise Fettüberzüge, die so genannten Fettcoatings. Zuckerhaltige Glasuren haben jedoch den Nachteil, dass diese einem nachfolgenden Trocknungsschritt unterliegen, zugleich eine deutliche Süße aufweisen und damit den Geschmack des Lebensmittels stark beeinflussen. Fetthaltige Fixierungssysteme verleihen dem Lebensmittel einen höheren Fettgehalt, was insbesondere bei fettreduzierten oder fettarmen Lebensmitteln nachteilig ist. Darüber hinaus verändert sich mit steigendem Fettgehalt auch der Geschmack des Lebensmittels. Aus diesen Gründen sind sowohl die zucker- wie fetthaltige Fixierungssysteme des Stands der Technik unbefriedigend.

Die Aufgabe der vorliegenden Erfindung hat somit darin bestanden, die beschriebenen Nachteile des Stands der Technik zu überwinden und insbesondere Stoffgemische zur Fixierung von Partikeln auf Lebensmitteln zur Verfügung zu stellen, die sich leicht applizieren lassen, eine stabile Bindung sicherstellen, durchsichtig sind oder sogar einen Glanzeffekt verleihen, keinen oder nur einen sehr geringen Eigengeschmack aufweisen und keinen separaten Trocknungsschritt benötigen.

### BESCHREIBUNG DER ERFINDUNG

Gegenstand der Erfindung ist ein Verfahren zur Herstellung von verzehrfertigen Feststoffzubereitungen, bei der auf der Oberfläche anteilig essbare Partikel fixiert sind, bei dem man
(a) ein Fixierungssystem erwärmt, bis eine Schmelze entsteht,
(b) die erhaltene Schmelze mit Hilfe einer oder mehrerer Düsen versprüht
(c) die essbaren Partikeln durch das entstandene Aerosol oder die entstehenden feinen Tröpfchen führt, dort benetzen lässt und auf die verzehrfertige Feststoffzubereitung leitet, und
(d) das resultierende Produkt soweit abkühlt, dass die Schmelze zu einem Glaserstarrt,
wobei das Fixierungssystems mindestens ein Kohlenhydrat enthält oder daraus besteht ausgewählt aus der Gruppe der hydrolysierten Stärken, Mono- und Disacchariden, Zuckeralkohole sowie deren Gemischen, wobei
(i) das Fixierungssystem einen Glasübergangspunkt zwischen 45 und 85 °C aufweist, und
(ii) der Anteil an essbaren Partikeln und Fixierungssystem zusammen 1 bis 10 Gew.-% - bezogen auf den Feststoff beträgt.

Überraschenderweise wurde gefunden, dass im Rahmen des erfindungsgemäßen Verfahrens Stoffsysteme der beschriebenen Art, speziell ausgewählte Kohlenhydrate, in ausgezeichneter Weise geeignet sind, essbare Partikel unterschiedlichster Art, die einen maximalen Teilchendurchmesser von etwa 20 mm aufweisen, auf den Oberflächen von Nahrungsmitteln zu fixieren. Die Adhäsionskraft besteht dabei zunächst aus einer beweglichen Kapillarbrückenbindung, die sich dann bei Abkühlung der Schmelze infolge einer Verglasung in eine Festkörperbrücke umwandelt. Diese ist wesentlich beständiger als alternative Lösungen aus dem Stand der Technik und zudem geschmacklich neutral, transparent und nicht hygroskopisch. Auf diese Weise ist es insbesondere möglich, statt einer gleichmäßigen Beschichtung die Oberfläche anteilig mit Partikeln auszurüsten, da diese lediglich fixiert werden. Dies führt zu einer vorteilhaften ästhetischen Gestaltung, weil die essbaren Partikel als solche zu erkennen sind und wird vom Konsumenten auch geschmacklich anders als ein vollständiger Überzug wahrgenommen. Da man die Schmelzen mit handelsüblichen Systemen verdüsen und aufsprühen kann, ist das Verfahren auch ohne besonderen technischen Aufwand durchführbar. Dabei ist von besonderem Nutzen, dass kein Trocknungsschritt erforderlich ist.

Durch die erfindungsgemäße Fixierung der essbaren Partikel auf der Oberfläche von Lebensmitteln können in idealer Weise verbesserte oder neuartige Produkte erhalten werden, insbesondere in optischer und/oder geschmacklicher Hinsicht. Auf Grund des erfindungsgemäßen Fixierungssystem - bei der es sich ausdrücklich nicht um einen Überzug handelt - lassen sich völlig neue Kompositionen mit den unterschiedlichsten Partikeln zusammenstellen, die es erlauben, beim Verzehr der neuartigen Lebensmittelprodukte während des Verzehrs unterschiedliche Geschmackserlebnisse, gleichzeitig, aber insbesondere nacheinander, wahrzunehmen. Das Erscheinungsbild und das Geschmackserlebnis lassen sich daher beliebig variieren, insbesondere wenn Partikel mit unterschiedlichem Aussehen und Aroma auf dem Lebensmittel fixiert wurden. So ist es mit der erfindungsgemäßen Fixierung von Partikeln möglich Snacks herzustellen, die sich nicht nur durch eine neuartige Textur und ein neuartiges Beißgefühl, sondern auch durch ein neuartiges Erscheinungsbild und insbesondere durch ein verbessertes und neuartiges Geschmackserlebnis auszeichnen.

### Verzehrfähige Feststoffzubereitungen

Bei den nach dem erfindungsgemäßen Verfahren erhältlichen verzehrfähigen Feststoffzubereitungen handelt es sich vorzugsweise um kohlenhydrathaltige Produkte, insbesondere um Knabberartikel wie z.B. Kartoffelchips. Die essbaren Partikel sind dabei ausgewählt aus der Gruppe, die gebildet wird von Trockenprodukten, Würzen, Süßstoffen und Aromastoffen, wobei das zur Fixierung dienende Fixierungssystem mindestens ein Kohlenhydrat enthält oder daraus besteht. Der Anteil an essbaren Partikeln und Fixierungssystem zusammen beträgt etwa 1 bis etwa 10 Gew.-% - bezogen auf den Feststoff. Dies wird im Folgenden näher erläutert.

### Feststoffe

Bevorzugte Feststoffzubereitungen, die für den Verzehr geeignet sind und die im Rahmen des erfindungsgemäßen Verfahrens mit den essbaren Partikeln beaufschlagt werden, sind kohlenhydratreiche Produkte wie z.B. Mehl- oder Stärkeprodukte, insbesondere Backwaren, frittierte Lebensmittel oder getrocknete extrudierte Lebensmittel. Typischerweise werden die Partikel auf Gebäck, Dauerbackwaren oder Snacks wie beispielsweise Kräcker, Laugengebäck, Kekse, Kartoffel- oder Maischips (z.B. Tortilla-Chips), Weizenmehlprodukte, (z.B. Gebäckstangen, Croutons, Brotchipse, Zwieback, extrudierte und nicht-extrudierte Knäckebrote) aufgebracht. Übliche Formen sind Dreiecke, Quadrate, Rechtecke, Trapeze, Kegel, Würfel, Quader, Zylinder, Spiralen, Stangen, Sphären, Scheiben, Streifen, Balken, Kreise, Kugeln, Ovale, Schalen, Pyramiden, Oktaeder, Prismen oder Ellipsen. Die Oberflächen können jedoch auch in sonstiger beliebiger Form vorliegen. Es ist bevorzugt, die essbaren Partikel mit den erfindungsgemäß einzusetzenden Fixierungssystem auf Lebensmitteln mit größeren Oberflächen aufzubringen. Typischerweise haben diese Lebensmittel eine Größe oberhalb von 10 mm, meist liegt die Größe im Bereich von 20 bis 100 mm.

### Essbare Partikel

Der Begriff essbare Partikel, die das erfindungsgemäße Verfahren zur Verfügung stellen kann, ist breit zu verstehen, da die Natur der Partikel für die Funktion der Erfindung unkritisch ist und die Partikel lediglich danach ausgewählt werden, welche Geschmacksrichtung den Zubereitungen verliehen werden soll. Grundsätzlich handelt es sich um Trockenprodukte, Würzen, Süßstoffe und/oder Aromastoffe. Die Partikel können in Form und Größe in weiten Bereichen variiert werden, ebenso ist die Beschaffenheit, Zusammensetzung, Herstellung oder Herkunft unkritisch. Typischerweise liegt die Größe der Partikel im Bereich von 0,1 bis 30 mm, vorzugsweise im Bereich von 1 bis 10 mm und insbesondere im Bereich von 2 bis 5 mm. Bei den Partikeln kann es sich um geschmacksgebende oder geschmacksneutrale, farbige, gefärbte, farblose sowie transparente Partikel handeln. Die Partikel weisen bevorzugt einen geringen Wassergehalt auf. Falls die Partikel ursprünglich einen hohen Wassergehalt aufwiesen, werden sie bevorzugt getrocknet verwendet (z.B. Trockenobst, getrocknetes Gemüse, getrocknetes Fleisch).

Beispiele für geeignete essbare Partikel sind walzengetrocknete Flocken, Pulver, Kompaktate, Kapseln, Agglomerate, Pressagglomerate, Pellets, Aromakompaktate, Extrudate. Bei den Partikeln kann es sich auch um ganze, meist aber zerkleinerte zum Verzehr geeignete Lebensmittel handeln, die beispielsweise zu den Partikeln gemahlen, geschrotet, geraspelt, gehäckselt, geschnitten, gehobelt oder auch gepresst, agglomeriert oder extrudiert wurden. Es seien beispielsweise genannt: Käseextrudate, geraspelter Käse, Käseimitate, Gemüsepartikel (z.B. rote, grüne oder gelbe Paprika, Chili, Peperoni, Zwiebel, Gurke, Tomate, Olive), Pilzstückchen, Obstpartikel (z.B. Aprikose, Pfirsich, Apfel, Birne, Feige, Dattel, Pflaume, Banane, Erdbeere, Melone, Ananas), Fleisch oder Fleischimitate (z.B. Salamistückchen, Schinkenwürfel), Kräuter oder Kräutermischungen, auf Träger aufgebrachte Aromen, eingekapselte oder verkapselte Aromen, durch Wirbelschichtgranulation oder Sprühtrocknung hergestellte Partikel, gefriergetrocknete Extrakte oder Aromen, Zucker oder Zuckerprodukte (z.B. Zuckerstückchen, Zuckerperlen, kleine Tabletten oder Bonbons), Schokoladenstückchen oder -streusel, ganze oder zerkleinerte Nüsse und ähnliches (z.B. ganze, halbe oder zerkleinerte Erdnüsse, gemahlene oder geraspelte Haselnüsse, Mandelsplitter, Kokosraspel), Sesam, Mohn, Kümmel, Sonnenblumenkerne, Grünkerne, geschrotete Kürbiskerne, Reis oder Reisprodukte (z.B. gepuffter Reis).

Mit den erfindungsgemäßen Fixierungssystem gelingt problemlos eine gute Fixierung auch von größeren und schwereren Partikeln. die einen mittleren Durchmesser von etwa 1 bis etwa 30 mm und vorzugsweise etwa 2 bis etwa 5 mm aufweisen können.

### Fixierungssystem

Fixierungssysteme mit besonders vorteilhaften Eigenschaften, die im Rahmen des erfindungsgemäßen Verfahrens Anwendung finden, zeichnen sich dadurch aus, dass sie einen Glasübergangspunkt im Bereich von etwa 45 bis etwa 85 °C und vorzugsweise etwa 30 bis etwa 50 °C aufweisen. Beim Überschreiten der Glasübergangstemperatur ist die Umwandlung eines festen Glases in eine gummiartige bis zähflüssige Schmelze zu beobachten. Diese Systeme schmelzen bei so niedrigen Temperaturen, dass keine chemische Beeinträchtigung, speziell Verfärbung der Fixierungsinhaltsstoffe oder Modifikation der Aromastoffe erfolgt, während beim Abkühlen aber sehr rasch eine Glasbildung eintritt, die die eingangs beschriebenen Vorzüge aufweist. Über weitere Parameter wie beispielsweise Viskosität, Menge und Zusammensetzung des Fixierungssystems, Form und Durchmesser der Dosieröffnung sowie Art und Funktionsweise des Dosiersystems kann eine optimale Anpassung auf die jeweilige Anwendung erfolgen. So ist es beispielsweise ebenfalls von Vorteil, wenn man Fixierungssysteme einsetzt, die bei 170 °C eine Viskosität von weniger als 1.000 mPas und speziell von etwa 50 bis etwa 300 mPas aufweisen. Bezüglich des Fixierungssystems hat es sich als vorteilhaft erwiesen, wenn dieses mindestens ein Kohlenhydrat oder Zuckeralkohol enthält oder daraus besteht. Ausgezeichnete Beispiele sind unter den hydrolysierten Stärken, den Mono- und Disacchariden, den Zuckeralkoholen sowie deren Gemischen zu finden, wie dies im Folgenden an Hand von bevorzugten Ausführungsbeispielen illustriert wird:

**Hydrolysierte Stärken.** Stärkehydrolysate zeichnen sich dadurch aus, dass sie niedrige Dextrose Äquivalente (DE) aufweisen. Typisch und im Sinne der Erfindung bevorzugt sind hydrolysierte Stärken mit eine DE unterhalb von 25, speziell von etwa 10 bis etwa 20. Die Hydrolysate weisen typisch geringe Mengen an freier Glucose und Maltose von typisch weniger als 1 Gew.-% auf, wie beispielsweise in US 3,663,369 beschrieben. Für Anwendungen, in denen eine besondere Süße erwünscht ist, können auch Stärkehydrolysate mit höheren Glucose- und Maltosegehalten eingesetzt werden, wie sie z.B. in US 3,849,194 vorgeschlagen werden.

**Mono- und Disaccharide.** Monosaccharide stellen Produkte der partiellen Oxidation mehrwertiger Alkohole dar. Alle Monosaccharide haben eine Kette aus mindestens drei Kohlenstoffatomen als Grundgerüst und weisen eine Carbonylgruppe sowie mindestens eine Hydroxylgruppe auf. Nach der Anzahl der Kohlenstoffatome spricht man von Triosen (3), Tetrosen (4), Pentosen (5), Hexosen (6), Heptosen (7) usw. Prinzipiell ist die Länge der Kohlenstoffkette unbegrenzt, in der Natur wurden bisher aber nur Einfachzucker mit maximal neun Kohlenstoffatomen beobachtet, wobei Hexosen und Pentosen am häufigsten zu finden sind. Des Weiteren befindet sich an einem der Kohlenstoffatome der nichtcyclischen (offenkettigen) Form eine Carbonylgruppe. Befindet sich die Carbonylgruppe am Ende der Kohlenstoffkette, bezeichnet man die Zucker als Aldose, bei einer Carbonylgruppe innerhalb der Kette spricht man von Ketosen.

Eine andere Einteilungsmöglichkeit der Monosaccharide besteht darin, zwischen *offenkettigen* (Aldose oder Ketose) Zuckern und *cyclischen* Zuckern zu unterscheiden. Die cyclischen Monosaccharide sind von den entsprechenden Aldosen oder Ketosen abgeleitete Halbacetale oder Halbketale. Dabei unterscheidet man Furanosen (Fünfringe) und Pyranosen (Sechsringe) mit jeweils einem Sauerstoffatom im Ring. Bevorzugt sind Monosaccharide mit 5 oder 6 Kohlenstoffatomen, speziell Fructose, Glucose und Mannose.

Disaccharide weisen hingegen die allgemeinen Summenformel CₙH₂ₙ₋₂Oₙ₋₁ auf Bei ihnen sind jeweils zwei Monosaccharide kovalent über eine glycosidische Bindung verknüpft. Das wirtschaftlich wichtigste und daher im Rahmen der Erfindung auch bevorzugte Disaccharid ist der Rohr- und Rübenzucker, die Saccharose. Dieser wird heute industriell aus dem Zuckerrohr und aus Zuckerrüben gewonnen und stellt einen wichtigen Bestandteil der menschlichen Ernährung dar.

**Zuckeralkohole.** Zuckeralkohole, die auch als Alditole bezeichnet werden, stellen nicht-zyklische Polyole der Formel

HOCH₂[CH(OH)]ₙCH₂OH,

da, die sich strukturell als Reduktionsprodukte von Kohlenhydraten ableiten. Bevorzugte Beispiele sind Mannit (Mannitol), Isomalt, Lactit, Sorbit (Sorbitol), Xylit (Xylitol), Threit, Erythrit und Arabit.

Die Kohlenhydrate können mit Wassermengen mit bis zu 20 Gew.-% und vorzugsweise etwa 0 bis etwa 7,5 Gew.-% versetzt werden. Je geringer die Wassermenge, umso fester wird die Fixierung.

Das Fixierungssystem kann darüber hinaus weitere Komponenten enthalten wie beispielsweise Konservierungsmittel, Antioxidantien, Emulgatoren, Zuckeraustauschstoffe, Süßstoffe, Genusssäuren, Farbstoffe, Färbemittel, Pigmente, geschmacksverstärkende Mittel, Geschmackstoffe, Aromen, Nutraceuticals, Spurenelemente, Mineralien, Vitamine, pflanzliche Extrakte und Ballaststoffe. Im Sinne der vorliegenden Erfindung verleiht das Fixierungssystem den Lebensmitteln einen besonderen Glanz, der besonders bei farbigen Produkten zu brillanten Farben führt. Zudem erhalten die Produkte nach dem Erstarren des erfindungsgemäßen Fixierungssystems eine besondere Textur, die als knusprig oder kross (crispy) beschrieben werden kann.

### BEISPIELE

### Beispiel 1

Es wird eine Mischung, anteilig bestehend aus mindestens zwei verschiedenen Stärkederivaten, Zuckeralkoholen oder Zucker, aufgeschmolzen und durch ein geeignetes, vortemperiertes Düsensystem in einen teilgeschlossenem und ebenfalls vortemperiertem Reaktorraum eingedüst. Das entstehende Aerosol oder die entstehenden feinen Tröpfchen werden in ein Fließbett von essbaren Partikeln, welche auf einer bevorzugten Feststoffzubereitung z.B. Kartoffelchips, fixiert werden sollen, gesprüht, um diese zu benetzen. Die mit dem Fixierungssystem benetzten essbaren Partikel werden mit einem temperierten Luftstrom auf die Feststoffzubereitung geleitet. Durch ein Temperaturgefälle von ausreichender Größe kühlt das Fixierungssystem unter Bildung einer Glasmatrix ab und fixiert dadurch die essbaren Partikel auf der Feststoffzubereitung dauerhaft.

### Beispiel 2

Es wird eine Mischung, anteilig bestehend aus mindestens zwei verschiedenen Stärkederivaten, Zuckeralkoholen oder Zucker aufgeschmolzen und in einer ausreichend kurzen Zeit heruntergekühlt sodass sich ein Glas bildet. Dieses wird zu einem Pulver mit einer Korngröße zwischen 0,5 und 2 mm gemahlen und gesiebt. Das Pulver wird aufgeschmolzen, mit einem Tomatenaroma versetzt und durch ein geeignetes, vortemperiertes Düsensystem in einen teilgeschlossenem und ebenfalls vortemperiertem Reaktorraum eingedüst. Das entstehende Aerosol oder die entstehenden feinen Tröpfchen werden in ein Fließbett von essbaren Partikeln, welche auf einer bevorzugten Feststoffzubereitung z.B. Kartoffelchips, fixiert werden sollen, gesprüht, um diese zu benetzen. Die mit dem Fixierungssystem benetzten essbaren Partikel werden mit einem temperierten Luftstrom auf die Feststoffzubereitung geleitet. Durch ein Temperaturgefälle von ausreichender Größe kühlt das Fixierungssystem unter Bildung einer Glasmatrix ab und fixiert dadurch die essbaren Partikel auf der Feststoffzubereitung dauerhaft.

In den folgenden **Tabellen 1 und 2** sind typische Formulierungsbeispiele angegeben.

**Tabellen 1 und 2**

| Formulierungsbeispiele (alle Angaben als Gew.-%) | | | | | | |
|---|---|---|---|---|---|---|
| **Komponenten** | **1** | **2** | **3** | **4** | **5** | **6** |
| Wasser | - | - | 5 | - | - | - |
| Isomalt ST-M | 50 | - | 45 | - | - | - |
| Isomalt ST-PF | - | 50 | - | - | - | - |
| Isomalt GS | - | - | - | 40 | 70 | - |
| Sorbitol | - | 50 | - | 18 | 10 | - |
| Mannitol | - | - | - | 40 | 20 | - |
| Trehalose | - | - | - | - | - | 38 |
| Glucose | - | - | - | - | - | 30 |
| Saccharose | 50 | - | 28 | - | - | - |
| Maltodextrin DE 18-20 | - | - | 10 | - | - | 30 |
| OSA Stärke Derivat | - | - | 10 | 2 | - | - |
| Tomatenaroma | - | - | 2 | - | - | 2 |

| **Komponenten** | **7** | **8** | **9** | **10** | **11** | **13** |
|---|---|---|---|---|---|---|
| Wasser | - | - | - | - | 5 | - |
| Isomalt ST-M | - | - | 50 | - | 75 | - |
| Isomalt ST-PF | - | - | - | 50 | - | - |
| Isomalt GS | - | 28 | - | - | - | - |
| Sorbitol | - | - | - | - | 5 | - |
| Mannitol | 58 | - | 50 | - | - | 40 |
| Trehalose | - | 30 | - | 50 | - | 20 |
| Saccharose | 14 | - | - | - | 15 | - |
| Maltose | 26 | 30 | - | - | - | 40 |
| Maltodextrin DE 18-20 | - | 10 | - | - | - | - |
| Tomatenaroma | 2 | 2 | - | - | - | - |

## Patentansprüche

1. Verfahren zur Herstellung von verzehrfertigen Feststoffzubereitungen, bei der auf der Oberfläche anteilig essbare Partikel fixiert sind, bei dem man
(a) ein Fixierungssystem erwärmt, bis eine Schmelze entsteht,
(b) die erhaltene Schmelze mit Hilfe einer oder mehrerer Düsen versprüht
(c) die essbaren Partikeln durch das entstandene Aerosol oder die entstehenden feinen Tröpfchen führt, dort benetzen lässt und auf die verzehrfertige Feststoffzubereitung leitet, und
(d) das resultierende Produkt soweit abkühlt, dass die Schmelze zu einem Glaserstarrt,
wobei das Fixierungssystems mindestens ein Kohlenhydrat enthält oder daraus besteht ausgewählt aus der Gruppe der hydrolysierten Stärken, Mono- und Disacchariden, Zuckeralkohole sowie deren Gemischen, wobei
(ii) das Fixierungssystem einen Glasübergangspunkt zwischen 45 und 85 °C aufweist, und
(ii) der Anteil an essbaren Partikeln und Fixierungssystem zusammen 1 bis 10 Gew.-% - bezogen auf den Feststoff beträgt.

2. Verfahren nach Anspruch 1, **dadurch gekennzeichnet, dass** man Feststoffe einsetzt, die ausgewählt sind aus der Gruppe, die gebildet wird von Mehl- oder Stärkeprodukten, Backwaren, Knabberartikeln, frittierten Lebensmitteln odergetrockneten extrudierten Lebensmitteln.

3. Verfahren nach Anspruch 1 und/oder 2, **dadurch gekennzeichnet, dass** man essbare Partikel einsetzt, die ausgewählt sind aus der Gruppe, die gebildet wird von Trockenprodukten, Würzen, Süßstoffen und Aromastoffen.

4. Verfahren nach mindestens einem der Ansprüche 1 bis 3, **dadurch gekennzeichnet, dass** man essbare Partikel einsetzt, die einen mittleren Durchmesser von 0,1 bis 30 mm aufweisen.

5. Verfahren nach mindestens einem der Ansprüche 1 bis 4, **dadurch gekennzeichnet, dass** man ein Fixierungssystem einsetzt, dass bei 170 °C eine Viskosität von weniger als 1.000 mPas aufweist.

6. Verfahren nach mindestens einem der Ansprüche 1 bis 5, **dadurch gekennzeichnet, dass** man ein Fixierungssystem einsetzt, das mindestens zwei Kohlenhydrate enthält oder daraus besteht.

7. Verfahren nach mindestens einem der Ansprüche 1 bis 6, **dadurch gekennzeichnet, dass** man die Schmelze bestehend aus den essbaren Partikeln und dem Fixierungssystem in einer Menge von 1 bis 10 Gew.-% - bezogen auf den Feststoff - aufsprüht.

## Claims

1. A process for the preparation of ready-to-eat solid preparations in which edible particles are proportionately fixed on the surface, which comprises
(a) heating a fixation system until a melt is formed,
(b) spraying the resulting melt by means of one or more nozzles
(c) passing the edible particles through the resulting aerosol or fine droplets, allowing them to wet there, and passing them onto the ready-to-eat solid preparation, and
(d) cooling the resulting product to the point where the melt solidifies into a glass,
wherein the fixation system contains or consists of at least one carbohydrate selected from the group consisting of hydrolyzed starches, mono- and disaccharides, sugar alcohols, and mixtures thereof,
said fixing system having a glass transition point between 45 and 85 °C, and
the proportion of edible particles and fixing system together is 1 to 10% by weight - based on the solid.

2. The process according to claim 1, **characterized in that** solids are used which are selected from the group formed by flour or starch products, bakery products, snack foods, deep-fried foods or dried extruded foods.

3. The process according to claim 1 and/or 2, **characterized in that** edible particles selected from the group formed by dried products, seasonings, sweeteners and flavorings are used.

4. The process according to at least one of claims 1 to 3, **characterized in that** edible particles having an average diameter of 0.1 to 30 mm are used.

5. The process according to at least one of claims 1 to 4, **characterized in that** a fixation system is used which has a viscosity of less than 1,000 mPas at 170 °C.

6. The process according to at least one of claims 1 to 5, **characterized in that** a fixation system is used which contains or consists of at least two carbohydrates.

7. The process according to at least one of claims 1 to 6, **characterized in that** the melt consisting of the edible particles and the fixing system is sprayed on in an amount of 1 to 10% by weight, based on the solid.

## Revendications

1. Un Procédé de préparation de préparations solides prêtes à consommer dans lesquelles des particules comestibles sont proportionnellement fixées à la surface, qui consiste à
(a) le chauffage d'un système de fixation jusqu'à ce qu'une masse fondue soit formée,
(b) la pulvérisation de la masse fondue résultante au moyen d'une ou plusieurs buses
(c) faire passer les particules comestibles à travers l'aérosol ou les fines gouttelettes résultantes, en les laissant s'y mouiller, et les faire passer sur la préparation solide prête à consommer, et
(d) refroidir le produit résultant jusqu'au point où la masse fondue se solidifie en un verre,
dans lequel le système de fixation contient ou consiste en au moins un hydrate de carbone choisi dans le groupe constitué par les amidons hydrolysés, les mono- et disaccharides, les alcools de sucre, et leurs mélanges,
ledit système de fixation ayant un point de transition vitreuse compris entre 45 et 85 °C, et
la proportion de particules comestibles et de système de fixation ensemble est de 1 à 10% en poids - par rapport au solide.

2. Le procédé selon la revendication 1, **caractérisé en ce que** l'on utilise des matières solides qui sont choisies dans le groupe formé par les produits à base de farine ou de produits amylacés, de produits de boulangerie, d'articles à grignoter, d'aliments frits ou de des aliments extrudés séchés.

3. Le procédé selon la revendication 1 et/ou 2, **caractérisé en ce que** l'on utilise des particules comestibles choisies dans le groupe formé par les produits secs, les condiments, les édulcorants et les arômes.

4. Le procédé selon au moins l'une des revendications 1 à 3, **caractérisé en ce que** l'on met en oeuvre des particules comestibles présentant un diamètre moyen compris entre 0,1 et 30 mm.

5. Le procédé selon au moins l'une des revendications 1 à 4, **caractérisé en ce que** l'on utilise un système de fixation qui présente une viscosité inférieure à 1000 mPas à 170°C.

6. Le procédé selon au moins l'une des revendications 1 à 5, **caractérisé en ce que** l'on utilise un système de fixation qui contient ou est constitué d'au moins deux hydrates de carbone.

7. Le procédé selon au moins l'une des revendications 1 à 6, **caractérisé en ce que** l'on pulvérise la masse fondue constituée des particules comestibles et du système de fixation en une quantité de 1 à 10 % en poids - par rapport à la matière solide.
